# EUROPEAN PATENT APPLICATION

(11) **EP 4 852 062 A1**
(43) Date of publication of application: **09.12.2026**
(21) Application number: 25920718.1
(22) Date of filing: 13.06.2025

(54) **MODULE STEEL STRAP, DESIGN METHOD FOR MODULE STEEL STRAP, AND BATTERY MODULE AND BATTERY PACK**

(30) Priority: 02.04.2025 CN 202510409301
(71) Applicant: Eve Energy Co., Ltd, Huizhou, Guangdong 516006 (CN)
(72) Inventor: PAN, Zikang, Wuhan, Hubei 430000 (CN); WEN, Yuekai, Wuhan, Hubei 430000 (CN); CAO, Fengfeng, Wuhan, Hubei 430000 (CN); GONG, Muhong, Wuhan, Hubei 430000 (CN); GUI, Ke, Wuhan, Hubei 430000 (CN)
(74) Representative: Nederlandsch Octrooibureau
(86) International application number: PCT/CN2025/101009
(87) International publication number: WO 2026/208007

(57) **Abstract**

The present disclosure discloses a module steel strap, a design method of a module steel strap, a battery module, and a battery pack. The design method includes: performing a charge-discharge test on a cell in a target battery module, obtaining cell expansion data of the cell during the charge-discharge test, determining parameter information of the module steel strap based on the cell expansion data and material information of a predetermined candidate steel strap, and determining the module steel strap corresponding to the target battery module based on the cell expansion data and the parameter information.

## Description

This application claims priority to Chinese Patent Application No. 2025104093018, filed with China National Intellectual Property Administration on April 2, 2025, which is hereby incorporated by reference in its entirety .

### FIELD

The present disclosure relates to the technical field of battery manufacturing, and particularly, to a module steel strap, a design method of a module steel strap, a battery module, and a battery pack.

### BACKGROUND

A module steel strap exhibits excellent rigidity and strength, capable of dissipating impact forces and vibration that a battery module may be subjected to during transportation, assembly and service, protecting a battery from damage caused by external mechanical stress, thus extending a service life of the battery.

Currently, dimensions of the module steel strap are determined based on a total length of the battery module, and a design is carried out accordingly. However, the designed module steel strap lacks sufficient strength checking/structural verification, which may lead to insufficient strength and fracture of the steel strap, causing damage to the battery module. Thus, reliability of the module steel strap is poor.

### SUMMARY

### Technical issues

A module steel strap designed in the related art lacks sufficient strength checking/structural verification, which may lead to insufficient strength and fracture of the steel strap, causing damage to a battery module. In short, reliability of the module steel strap is poor. To this end, the present disclosure provides a module steel strap, a design method of a module steel strap, a battery module, and a battery pack, capable of improving the reliability of the module steel strap, thus preventing damage to the battery module caused by the insufficient strength of the module steel strap.

### Technical solutions

The present disclosure provides a module steel strap, a design method of a module steel strap, a battery module, and a battery pack, capable of improving the reliability of the module steel strap, thus preventing damage to the battery module caused by the insufficient strength of the module steel strap.

In a first aspect, the present disclosure provides a module steel strap. The module steel strap includes a transverse section adapted to a lateral side of a battery module and a longitudinal section adapted to an end of the battery module. The transverse section and the longitudinal section of the module steel strap are designed based on cell expansion data of a cell in the battery module and parameter information. The cell expansion data is obtained by performing a charge-discharge test on the cell in the battery module.

In one possible embodiment, a thickness of the module steel strap ranges from 0.5 mm to 5 mm.

In one possible embodiment, a thickness of the module steel strap ranges from 0.5 mm to 1.5 mm.

In one possible embodiment, a width of the module steel strap ranges from 10 mm to 40 mm.

In one possible embodiment, a width of the module steel strap ranges from 25 mm to 35 mm.

In one possible embodiment, an expansion force of the cell ranges from 40,000 N to 80,000 N.

In one possible embodiment, a minimum cross-sectional area of the module steel strap satisfies σ= F/A1, where: σ represents a tensile strength of the module steel strap; F represents an expansion force of the cell; and A1 represents the minimum cross-sectional area of the module steel strap.

In one possible embodiment, a design cross-sectional area A2 of the module steel strap is equal to the product of a thickness of the module steel strap and a width of the module steel strap; and the design cross-sectional area A2 is greater than the quotient of the expansion force of the cell divided by a tensile strength of a material; and the design cross-sectional area A2 is greater than the minimum cross-sectional area A1.

In one possible embodiment, a steel strap width of the module steel strap is greater than or equal to the quotient of a minimum cross-sectional area of the module steel strap divided by a steel strap thickness of the module steel strap.

In a second aspect, the present disclosure provides a design method of a module steel strap. The design method includes: performing a charge-discharge test on a cell in a target battery module; obtaining cell expansion data of the cell during the charge-discharge test; determining, based on the cell expansion data and material information of a predetermined candidate steel strap, parameter information of the module steel strap; and designing, based on the cell expansion data and the parameter information, the module steel strap corresponding to the target battery module.

In one possible embodiment, said determining, based on the cell expansion data and the material information of the predetermined candidate steel strap, the parameter information of the module steel strap includes: extracting expansion force information and expansion rate information of the cell from the cell expansion data; obtaining the material information of the predetermined candidate steel strap; and determining the parameter information of the module steel strap based on the expansion force information, the expansion rate information, and the material information.

In one possible embodiment, said determining the parameter information of the module steel strap based on the expansion force information, the expansion rate information, and the material information includes: determining, based on the expansion force information and the expansion rate information, a stress situation corresponding to the module steel strap; and determining, based on the stress situation and the material information, the parameter information of the module steel strap.

In one possible embodiment, said determining, based on the stress situation and the material information, the parameter information of the module steel strap includes: determining, based on the material information, a mechanical strength corresponding to the predetermined candidate steel strap; and designing, based on the stress situation and the mechanical strength, a material and a dimension of the module steel strap.

In one possible embodiment, said determining, based on the cell expansion data and the parameter information, the module steel strap corresponding to the target battery module includes: designing, based on the cell expansion data and the parameter information, a steel strap model corresponding to the parameter information; performing a simulation test on the steel strap model; and in response to a simulation test result satisfying a predetermined condition, designing, based on the steel strap model, the module steel strap corresponding to the target battery module.

In one possible embodiment, said designing, based on the cell expansion data and the parameter information, the steel strap model corresponding to the parameter information includes: obtaining a base model; and adjusting the base model based on the cell expansion data and the parameter information and obtaining the steel strap model corresponding to the parameter information.

In one possible embodiment, said performing the simulation test on the steel strap model includes: applying, based on the cell expansion data, a load and a boundary condition to the steel strap model; and performing the simulation test on the steel strap model to which the load and the boundary condition are applied.

In one possible embodiment, said obtaining the cell expansion data of the cell during the charge-discharge test includes: obtaining, based on an expansion analysis system, an expansion force and an expansion rate of the cell during the charge-discharge test.

In a third aspect, the present disclosure also provides a battery module. The battery module includes a group of cells, a first end plate, a second end plate, and at least one module steel strap. The second end plate is opposite to the first end plate. The group of cells is sandwiched between the first end plate and the second end plate. A module assembly is formed by the group of cells, the first end plate, and the second end plate. The module assembly is bound by the at least one module steel strap. The steel strap is manufactured by using the design method of the module steel strap according to any one of the above embodiments.

In a fourth aspect, the present disclosure also provides a battery pack. The battery pack includes the battery module and a battery case. The battery module is disposed in the battery case.

In a fifth aspect, the present disclosure also provides a computer-readable storage medium. The storage medium has a computer program stored thereon. The computer program, when executed by a processor, implements the steps of the method according to any one of the above embodiments.

### Beneficial effects

The present disclosure provides the module steel strap, the design method of the module steel strap, the battery module, and the battery pack. The module steel strap includes the transverse section adapted to the lateral side of the battery module and the longitudinal section adapted to the end of the battery module. The transverse section and the longitudinal section of the module steel strap are obtained based on the cell expansion data of the cell in the battery module and the parameter information. The cell expansion data is obtained by performing the charge-discharge test on the cell in the battery module. In the design method of the module steel strap according to the embodiments of the present disclosure, after performing the charge-discharge test on the cell in the target battery module, the cell expansion data of the cell during the charge-discharge test is obtained. Then, the parameter information of the module steel strap is designed based on the cell expansion data and the material information of the predetermined candidate steel strap. Finally, the module steel strap corresponding to the target battery module is determined based on the cell expansion data and the parameter information. In the design scheme of the module steel strap according to the present disclosure, the parameter information of the module steel strap is determined based on the cell expansion data and the material information of the predetermined candidate steel strap. Finally, the module steel strap corresponding to the target battery module is designed based on the cell expansion data and the parameter information, ensuring a strong correlation between the determined module steel strap and the target battery module. Moreover, the cell expansion data of the cell in the target battery module during the charging and discharging is also taken into account during the design. Therefore, a degree of matching between the steel strap and the target battery can be improved. Thus, the reliability of the module steel strap can be improved, thus preventing damage to the battery module caused by the insufficient strength of the module steel strap.

### BRIEF DESCRIPTION OF THE DRAWINGS

FIG. 1 is a schematic flowchart of a design method of a module steel strap according to an embodiment of the present disclosure.
FIG. 2 is a schematic structural view of the battery module according to an embodiment of the present disclosure.
FIG. 3 is a schematic exploded view of the battery module according to an embodiment of the present disclosure.
FIG. 4 is a schematic structural view of a battery pack according to an embodiment of the present disclosure.

### DETAILED DESCRIPTION OF THE EMBODIMENTS

The technical solutions in the embodiments of the present disclosure will be described clearly and completely in conjunction with the accompanying drawings.

Embodiments of the present disclosure provide a design method of a module steel strap, an apparatus, an electronic device, and a storage medium.

The design method of the module steel strap may be applied in a terminal. The terminal may include a tablet computer or a personal computer (PC). The terminal may establish a wired or wireless connection with a server. The server may include a standalone server, a distributed server, or a server cluster composed of a plurality of servers.

Detailed descriptions are provided below. It should be noted that a description order of the following embodiments is not used to limit the priority of the embodiments.

A design method of a module steel strap includes: performing a charge-discharge test on a cell in a target battery module; obtaining cell expansion data of the cell during the charge-discharge test, determining parameter information of the module steel strap based on the cell expansion data and material information of a predetermined candidate steel strap, and designing the module steel strap corresponding to the target battery module based on the cell expansion data and the parameter information.

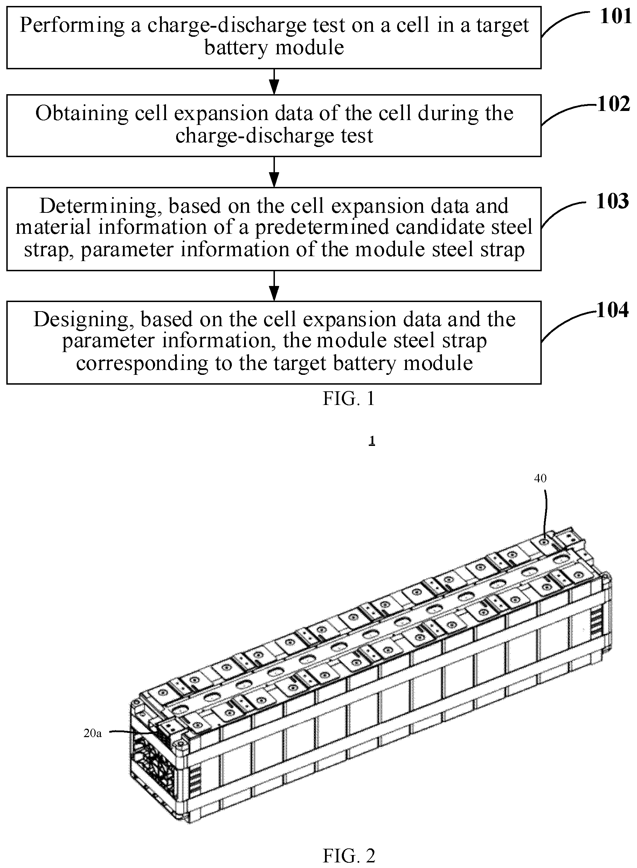

Referring to FIG. 1, FIG. 1 is a schematic flowchart of a design method of a module steel strap according to an embodiment of the present disclosure. The design method of the module steel strap may include actions at blocks 101 to 104.

At block 101, a charge-discharge test is performed on a cell in a target battery module.

The charge-discharge test is a basic experiment for evaluating performance of the cell, including a process of charging and discharging the cell and involving monitoring a relevant parameter to obtain important data on a characteristic of a battery.

The cell is charged at a predetermined current and a predetermined voltage until the cell reaches its rated voltage or the current drops to a predetermined low value. After reaching the rated voltage, the voltage is kept constant until the current drops to nearly zero, which is a constant-voltage charging stage. The cell is discharged at a predetermined current until the voltage of the cell drops to a safe cut-off voltage.

For example, the cell is charged at a current of 5 A until the voltage reaches 4.2 V. The voltage of 4.2 V is held until the charging current drops below 0.1 A, thereby completing charging. During discharging, the cell is discharged at a current of 5 A until the voltage drops to 3.0 V. A pressure sensor is used to monitor a change in an expansion force of the cell during charging and discharging, and a maximum expansion force is recorded as 100 N. A displacement sensor is used to measure a change in a length of the cell, and an expansion rate of the cell is calculated to be 2%.

At block 102, cell expansion data of the cell during the charge-discharge test is obtained.

During the charging and discharging, an expansometer or an in-situ expansion analyzer is used to monitor an expansion situation of the cell. These devices can measure changes in a thickness or a volume of the battery in real time. The expansion data of the cell under different charging states is recorded, including an expansion rate, an expansion force, and an expansion amount. The expansion rate is typically expressed in percentage. Expansion characteristics of the cell under different States of Charge (SOCs) are determined by analyzing a relationship between the expansion data and a charge-discharge state of the cell.

At block 103, parameter information of the module steel strap is determined based on the cell expansion data and material information of a predetermined candidate steel strap.

The predetermined candidate steel strap refers to several possible steel strap options pre-selected based on application needs and performance requirements when designing a battery module steel strap system. These candidate steel straps typically have different material properties and dimensional specifications. The parameter information of the module steel strap refers to technical details of the steel strap determined for the specific battery module design. These parameters ensure that the steel strap can adapt to the expansion characteristics of the cell while meeting requirements for structural strength, durability, and safety. The parameter information of the module steel strap may include a material type, a tensile strength, a yield strength, a width, a length, and a thickness. The tensile strength is a critical value at which metal transitions from uniform plastic deformation to localized concentrated plastic deformation. The tensile strength is also a maximum load-bearing capacity of metal under a static stretching condition. The tensile strength represents resistance of a material to maximum uniform plastic deformation.

For example, a detailed parameter of a material of the candidate steel strap may be obtained, including a tensile strength, a yield strength, an elongation at break, an elastic modulus, etc. Then, a force that the steel strap needs to withstand and deformation of the steel strap are calculated based on the maximum expansion force and the expansion rate of the cell. A dimension, including a width, a thickness, and a length, of the steel strap is designed based on a calculation result and the material parameter, ensuring that the dimension of the steel strap can adapt to a maximum expansion amount of the battery while providing a sufficient strength and stiffness.

For example, the data obtained from the charge-discharge test shows that the maximum expansion force of the cell when fully charged is 150 N, and the expansion rate of the cell when fully charged is 3%. Material m (304 stainless steel): a tensile strength of 1,200 MPa, a yield strength of 300 MPa, and an elongation at break of 25%. Material n (6061 aluminum alloy): a tensile strength of 290 MPa, a yield strength of 160 MPa, an elongation at break of 12%. It can be concluded from the analysis of the cell expansion data that: the expansion force is 150 N, and the expansion rate is 3%. Then, based on the expansion force and the tensile strength of the material, a material capable of safely withstanding this force is selected. The tensile strength of material m (304 stainless steel) is 1,200 MPa, which is far superior to material n (6061 aluminum alloy). Therefore, material m is selected. A cross-sectional area of the steel strap is calculated using a formula σ= F/A1, where: σ represents a tensile strength of the module steel strap, F represents an expansion force of the cell, and A1 represents a minimum cross-sectional area of the module steel strap. Allowable stress is taken as a certain proportion of the yield strength of material m, such as 60%, σ= 0.6×300 MPa=180 MPa, A= F/σ= 150 N/180 MPa= 8.33×10⁻⁷m².

If a width of the selected steel strap is 20 mm, then a thickness t= A/width= 8.33×10-7m²/20 mm= 0.0417 mm. However, it should be noted that such a thin thickness is not practically manufacturable, and thus the dimension shall be rounded up to a machinable value, such as 0.1 mm.

In addition, it should be noted that in some embodiments of the present disclosure, the width of the steel strap needs to be greater than the cross-sectional area of the steel strap /the thickness of the steel strap. If the calculated width of the steel strap does not fall within this range, the material shall be reselected for recalculation and redesign.

It should also be noted that in some embodiments of the present disclosure, a design cross-sectional area A2 of the module steel strap is equal to the product of a thickness of the module steel strap and a width of the module steel strap, and the design cross-sectional area A2 is greater than the quotient of the expansion force of the cell divided by a tensile strength of a material. Thus, the stress of the steel strap is prevented from exceeding the tensile strength of the material when the steel strap bears the cell expansion force. Moreover, the design cross-sectional area A2 is greater than the minimum cross-sectional area A1. Thus, it is ensured that the module steel strap can not only meet basic mechanical requirements, but also accommodate manufacturing tolerance, material inhomogeneity, and other practical factors.

Optionally, in some embodiments of the present disclosure, the step of determining, based on the cell expansion data and the material information of the predetermined candidate steel strap, the parameter information of the module steel strap may include: extracting expansion force information and expansion rate information of the cell from the cell expansion data, obtaining the material information of the predetermined candidate steel strap, and determining the parameter information of the module steel strap based on the expansion force information, the expansion rate information and the material information.

The expansion force information refers to a force generated by a volume change caused by a chemical reaction inside the cell during the charging and discharging. The expansion rate information describes a percentage of the volume change of the cell during the charging and discharging. The expansion rate information, as a key parameter, is used to evaluate the thermodynamic stability and structural integrity of the battery.

Optionally, in some embodiments of the present disclosure, the step of determining the parameter information of the module steel strap based on the expansion force information, the expansion rate information, and the material information may include: determining a stress situation corresponding to the module steel strap based on the expansion force information and the expansion rate information, and determining the parameter information of the module steel strap based on the stress situation and the material information.

For example, stress in the steel strap is calculated based on the expansion force, and the cross-sectional area of the steel strap by using a principle of material mechanics. A degree of deformation to be accommodated by the module steel strap is evaluated based on the expansion rate information, which guides the design of the steel strap to avoid failure due to excessive deformation. Amaterial with a sufficient tensile strength and yield strength is selected based on the material information of the candidate steel strap to withstand the calculated stress. The width and the thickness of the module steel strap are determined to avoid fracture or plastic deformation of the steel strap under maximum stress. Then, a simulation tool such as finite element analysis (FEA) is used to simulate a behavior of the steel strap under an actual operating condition to verify whether the designed steel strap can meet strength and durability requirements. If a simulation result shows that the steel strap design does not meet the requirements, the dimension or the material of the steel strap are adjusted, and then the simulation analysis is performed again until a final parameter of the steel strap is determined, including the material type, the dimension (the width, the thickness, and the length), a pre-tightening force, etc.

Optionally, in some embodiments of the present disclosure, the step of determining the parameter information of the module steel strap based on the stress situation and the material information may include: determining a mechanical strength corresponding to the predetermined candidate steel strap based on the material information, and determining a material and a dimension of the module steel strap based on the stress situation and the mechanical strength.

For example, the material information of the candidate steel strap can be obtained, including tensile strength, yield strength, elongation at break, elastic modulus, etc. Performance data of each candidate material is analyzed to determine whether the candidate steel strap meets a basic mechanical property requirement. Actual stress of the steel strap during operation is calculated based on the cell expansion data to ensure that this stress value is lower than the yield strength of the material. One or several materials capable of withstanding the expected operating stress are selected from the candidate materials. A required cross-sectional area of the steel strap is calculated based on operating stress and the tensile strength of the material to avoid fracture of the steel strap under the maximum expansion force.

At block 104, the module steel strap corresponding to the target battery module is designed based on the cell expansion data and the parameter information.

For example, a steel strap prototype is fabricated based on the finalized design parameter. Practical testing of the steel strap prototype is carried out to verify its performance and durability when the cell expands and thus to ensure that performance of the steel strap prototype in practical applications meets the design requirements. Detailed design documents and manufacturing drawings are compiled for mass production of the module steel strap corresponding to the target battery module.

Optionally, in some embodiments of the present disclosure, the step of designing the module steel strap corresponding to the target battery module based on the cell expansion data and the parameter information may include: determining a steel strap model corresponding to the parameter information based on the cell expansion data and the parameter information, performing a simulation test on the steel strap model, and in response to a simulation test result satisfying a predetermined condition, determining the module steel strap corresponding to the target battery module based on the steel strap model.

The predetermined condition refers to a parameter and a standard that are set based on design requirements and safety standards to evaluate whether the simulation result is acceptable. The predetermined condition may be that the stress generated in the steel strap shall not exceed a predetermined percentage of the yield strength or the tensile strength of the material to avoid the plastic deformation or the fracture, the deformation of the steel strap shall not exceed a maximum allowable design value to ensure structural integrity and function of the battery module, and/or the steel strap shall withstand repeated stress and strain caused by a plurality of charge-discharge cycles without fatigue damage.

For example, the dimensional parameter of the steel strap, including the width, the thickness, and the length, is calculated based on expansion force and expansion rate. A three-dimensional geometric model of the steel strap is designed based on the calculated dimensional parameter. The steel strap model is imported in Computer-Aided Engineering (CAE) software, and a boundary condition and a loading condition are set for the simulation analysis. Properties of the material of the steel strap are input, such as an elastic modulus, a Poisson's ratio, a density, and a yield strength. A corresponding load and a corresponding constraint are applied based on the cell expansion data to simulate the stress situation of the steel strap under the practical operating condition. Simulation calculation is performed to monitor responses of the steel strap such as the stress, the strain, and displacement under a simulated expansion force. The simulation result is analyzed to evaluate whether the steel strap meets the design requirements, such as whether the stress falls within an allowable range of the material and whether the deformation is controllable. If the simulation test results meet the predetermined condition (for example, maximum stress of the steel strap is lower than the tensile strength of the material, and the deformation falls within the allowable range), a physical object is manufactured based on the final confirmed steel strap model, and a necessary physical test is conducted to verify the simulation result.

Optionally, in some embodiments of the present disclosure, the step of determining the steel strap model corresponding to the parameter information based on the cell expansion data and the parameter information may include: obtaining a base model, and adjusting the base model based on the cell expansion data and the parameter information and obtaining the steel strap model corresponding to the parameter information.

For example, a base model is selected or created, which is a general model of the steel strap and may be a two-dimensional drawing or a three-dimensional Computer-Aided Design (CAD) model. Optionally, in some embodiments of the present disclosure, the base model to be ensured includes all necessary geometric details, such as the dimension, tolerance, and material properties. Key parameters such as the expansion force and the expansion rate are obtained from the cell test to determine the expansion characteristics of the battery in different states. The dimension of the steel strap model is adjusted based on the expansion data, including the width, the thickness, and the length of the steel strap, to accommodate a change caused by expansion of the cell. The required cross-sectional area of the steel strap is calculated based on the cell expansion force and the mechanical properties of the steel strap material (such as the tensile strength and the yield strength). A detailed model of the steel strap is designed based on the adjusted dimension. The pre-tightening force of the steel strap is designed to ensure that the steel strap can provide sufficient pressure to resist battery expansion during mounting. The CAE software is used to perform the simulation test on the adjusted steel strap model to simulate the stress situation under the practical operational condition. The simulation result is analyzed to check whether the steel strap meets all the design requirements, such as the stress and the deformation. If the simulation result does not meet the design requirements, the steel strap model is adjusted based on the analysis result, and the simulation test is repeated. When the steel strap model passes all simulation tests, it is determined that such a model is finalized as the module steel strap model corresponding to the target battery module.

Optionally, in some embodiments of the present disclosure, the step of performing the simulation test on the steel strap model may include: applying a load and a boundary condition to the steel strap model based on the cell expansion data, and performing the simulation test on the steel strap model to which the load and the boundary condition are applied.

For example, a load to be applied to the steel strap is determined based on the maximum expansion force recorded by the cell in the charge-discharge test. A corresponding expansion force is applied to the steel strap model, which can be achieved through a load definition function in the finite element analysis (FEA) software. An appropriate fixing constraint is set based on an actual fixing manner of the steel strap in the battery module. For example, if an end of the steel strap is fixed, a fixing constraint is applied at a corresponding position in the model. If displacement of the steel strap is limited in some directions, corresponding displacement constraints need to be set. Where the steel strap model is symmetrical, this feature can be used to simplify the model and reduce a calculation amount. Then, an appropriate simulation type is selected according to analysis purposes, such as static structural analysis, dynamic analysis, and fatigue analysis. The properties of the steel strap material are input into the simulation model, including the elastic modulus, the Poisson's ratio, the yield strength, etc. The simulation calculation is started, and a response of the steel strap model is solved by the software based on the defined load and boundary condition. During the simulation operation, convergence and accuracy of the calculation are monitored to ensure reliability of the simulation result.

The embodiment of the present disclosure provides the design method of the module steel strap. After performing the charge-discharge test on the cell in the target battery module, the cell expansion data of the cell during the charge-discharge test is obtained. Then, the parameter information of the module steel strap is determined based on the cell expansion data and the material information of the predetermined candidate steel strap. Finally, the module steel strap corresponding to the target battery module is designed based on the cell expansion data and the parameter information. In the design scheme of the module steel strap according to the present disclosure, the parameter information of the module steel strap is determined based on the cell expansion data and the material information of the predetermined candidate steel strap. Finally, the module steel strap corresponding to the target battery module is designed based on the cell expansion data and the parameter information, ensuring a strong correlation between the determined module steel strap and the target battery module. Moreover, the cell expansion data of the cell during the charging and discharging is also taken into account during the design. Therefore, a degree of matching between the steel strap and the target battery module can be improved. Thus, the reliability of the module steel strap can be improved.

Referring to FIG. 2, an embodiment of the present disclosure provides a module steel strap 30. The module steel strap 30 includes a transverse section adapted to a lateral side of a battery module and a longitudinal section adapted to an end of the battery module. The transverse section and the longitudinal section of the module steel strap 30 are determined based on cell expansion data of a cell in the battery module and parameter information. The cell expansion data is obtained by performing a charge-discharge test on the cell in the battery module. For the specific design method, reference can be made to the steps of the above embodiments, and details thereof are omitted herein. During operation of the battery module, the expansion forces generated by the charging and discharging of the cell exhibit different distribution characteristics at different parts of the battery module. The synergistic action of the transverse section and the longitudinal section can more effectively dissipate and withstand these forces and can more accurately respond to force requirements of the different parts of the module compared to the conventional steel strap with a single structure, thereby ensuring stability of the module structure. The design of this adjustable steel strap optimizes the design method of the battery module steel strap. On the one hand, it is ensured that the strength of the steel strap can meet the design requirements of the different parts of the module, thereby improving safety and stability of the battery module during operation. On the other hand, through the precise design, a design redundancy problem that may occur in the conventional steel strap can be avoided, thereby reducing use of unnecessary materials. Thus, cost of the steel strap can be effectively lowered, achieving cost optimization while improving product performance.

Optionally, in some embodiments of the present disclosure, a thickness of the module steel strap ranges from 0.5 mm to 5 mm.

Optionally, in some embodiments of the present disclosure, a thickness of the module steel strap 30 ranges from 0.5 mm to 1.5 mm.

Optionally, in some embodiments of the present disclosure, a width of the module steel strap 30 ranges from 10 mm to 40 mm.

Optionally, in some embodiments of the present disclosure, a width of the module steel strap 30 ranges from 25 mm to 35 mm.

Optionally, in some embodiments of the present disclosure, an expansion force of the cell ranges from 40,000 N to 80,000N.

Optionally, in some embodiments of the present disclosure, a minimum cross-sectional area of the module steel strap 30 satisfies σ= F/A1, where σ represents a tensile strength of the module steel strap, F represents an expansion force of the cell, and A1 represents the minimum cross-sectional area of the module steel strap 30.

Optionally, in some embodiments of the present disclosure, a design cross-sectional area A2 of the module steel strap 30 is equal to the product of a thickness of the module steel strap 30 and a width of the module steel strap 30, and the design cross-sectional area A2 is greater than the quotient of the expansion force of the cell divided by a tensile strength of a material, and the design cross-sectional area A2 is greater than the minimum cross-sectional area A1.

Optionally, in some embodiments of the present disclosure, a steel strap width of the module steel strap 30 is greater than or equal to the quotient of a minimum cross-sectional area of the module steel strap 30 divided by a steel strap thickness of the module steel strap 30.

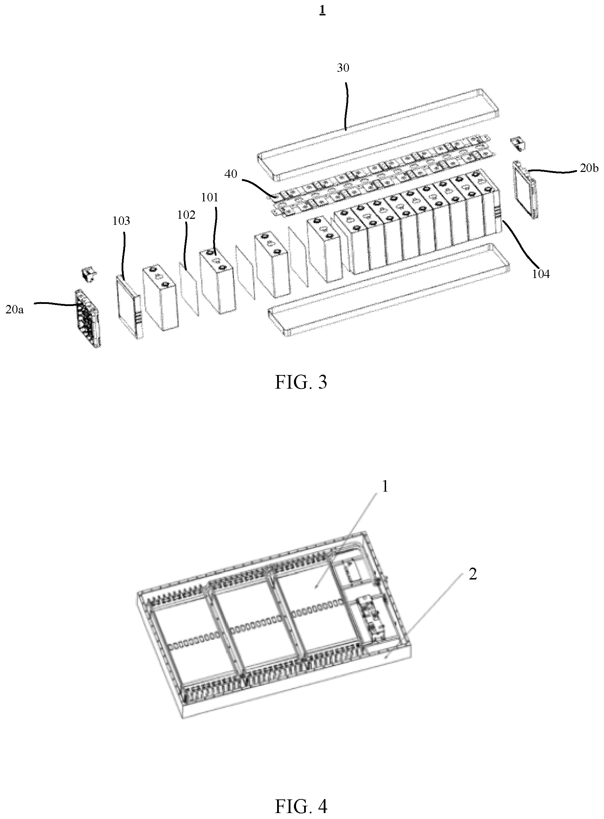

Correspondingly, embodiments of the present disclosure also provide a battery module, as shown in FIGS. 2 and 3. The battery module 1 includes a group of cells 10, a first end plate 20a, a second end plate 20b opposite to the first end plate 20a, and at least one module steel strap 30. A module assembly is formed by the group of cells 10, the first end plate 20a, and the second end plate 20b. The module assembly is bound by the module steel strap 30. The module steel strap 30 is prepared by using the design method of the module steel strap according to any one of the above embodiments.

The group of cells 10 includes a plurality of cells 101 arranged at intervals, a thermal insulation pad 102 disposed between adjacent cells 101 of the plurality of cells 101, a first insulation sheet 103 disposed between the cell 101 and the first end plate 20a, and a second insulation sheet 104 disposed between the cell 101 and the second end plate 20b. In addition, the plurality of cells 101 is further provided with a Cell Connection System (CCS) assembly 40. The CCS assembly 40 is configured for an electrical connection between the cells 101 and a connection between the cell 101 and an external circuit, ensuring that the battery module 1 can operate safely and effectively.

In addition, embodiments of the present disclosure also provide a battery pack. As shown in FIG. 4, FIG. 4 shows a schematic structural view of a battery pack according to an embodiment of the present disclosure. The battery pack includes the battery module 1 according to the embodiments of the present disclosure, and a battery case 2. The battery module 1 is disposed in the battery case 2. Since the battery pack includes the battery module 1 according to the embodiments of the present disclosure, and the battery module 1 includes the module steel strap 30 according to the embodiments of the present disclosure, the battery pack has some or all of the beneficial effects of the embodiments of the module steel strap 30, which is not elaborated herein.

## Claims

1. A module steel strap, comprising:
a transverse section adapted to a lateral side of a battery module; and
a longitudinal section adapted to an end of the battery module,
wherein the transverse section and the longitudinal section of the module steel strap are designed based on cell expansion data of a cell in the battery module and parameter information, the cell expansion data being obtained by performing a charge-discharge test on the cell in the battery module.

2. The module steel strap according to claim 1, wherein a thickness of the module steel strap ranges from 0.5 mm to 5 mm.

3. The module steel strap according to claim 1 or 2, wherein a thickness of the module steel strap ranges from 0.5 mm to 1.5 mm.

4. The module steel strap according to any one of claims 1 to 3, wherein a width of the module steel strap ranges from 10 mm to 40 mm.

5. The module steel strap according to any one of claims 1 to 4, wherein a width of the module steel strap ranges from 25 mm to 35 mm.

6. The module steel strap according to any one of claims 1 to 5, wherein an expansion force of the cell ranges from 40,000 N to 80,000 N.

7. The module steel strap according to any one of claims 1 to 6, wherein a minimum cross-sectional area of the module steel strap satisfies σ= F/A1, where:
σ represents a tensile strength of the module steel strap;
F represents an expansion force of the cell; and
A1 represents the minimum cross-sectional area of the module steel strap.

8. The module steel strap according to claim 7, wherein:
a design cross-sectional area A2 of the module steel strap is equal to the product of a thickness of the module steel strap and a width of the module steel strap; and
the design cross-sectional area A2 is greater than the quotient of the expansion force of the cell divided by a tensile strength of a material; and
the design cross-sectional area A2 is greater than the minimum cross-sectional area A1.

9. The module steel strap according to any one of claims 1 to 8, wherein a steel strap width of the module steel strap is greater than or equal to the quotient of a minimum cross-sectional area of the module steel strap divided by a steel strap thickness of the module steel strap.

10. A design method of a module steel strap, the design method comprising:
performing a charge-discharge test on a cell in a target battery module;
obtaining cell expansion data of the cell during the charge-discharge test;
determining, based on the cell expansion data and material information of a predetermined candidate steel strap, parameter information of the module steel strap; and
designing, based on the cell expansion data and the parameter information, the module steel strap corresponding to the target battery module.

11. The design method of the module steel strap according to claim 10, wherein said determining, based on the cell expansion data and the material information of the predetermined candidate steel strap, the parameter information of the module steel strap comprises:
extracting expansion force information and expansion rate information of the cell from the cell expansion data;
obtaining the material information of the predetermined candidate steel strap; and
determining, based on the expansion force information, the expansion rate information, and the material information, the parameter information of the module steel strap.

12. The design method of the module steel strap according to claim 11, wherein said determining, based on the expansion force information, the expansion rate information, and the material information, the parameter information of the module steel strap comprises:
determining, based on the expansion force information and the expansion rate information, a stress situation corresponding to the module steel strap; and
determining, based on the stress situation and the material information, the parameter information of the module steel strap.

13. The design method of the module steel strap according to claim 12, wherein said determining, based on the stress situation and the material information, the parameter information of the module steel strap comprises:
determining, based on the material information, a mechanical strength corresponding to the predetermined candidate steel strap; and
determining, based on the stress situation and the mechanical strength, a material and a dimension of the module steel strap.

14. The design method of the module steel strap according to any one of claims 10 to 13, wherein said designing, based on the cell expansion data and the parameter information, the module steel strap corresponding to the target battery module comprises:
designing, based on the cell expansion data and the parameter information, a steel strap model corresponding to the parameter information;
performing a simulation test on the steel strap model; and
in response to a simulation test result satisfying a predetermined condition, designing, based on the steel strap model, the module steel strap corresponding to the target battery module.

15. The design method of the module steel strap according to claim 14, wherein said designing, based on the cell expansion data and the parameter information, the steel strap model corresponding to the parameter information comprises:
obtaining a base model; and
adjusting the base model based on the cell expansion data and the parameter information, and obtaining the steel strap model corresponding to the parameter information.

16. The design method of the module steel strap according to claim 14 or 15, wherein said performing the simulation test on the steel strap model comprises:
applying, based on the cell expansion data, a load and a boundary condition to the steel strap model; and
performing the simulation test on the steel strap model to which the load and the boundary condition are applied.

17. The design method of the module steel strap according to any one of claims 10 to 16, wherein said obtaining the cell expansion data of the cell during the charge-discharge test comprises:
obtaining, based on an expansion analysis system, an expansion force and an expansion rate of the cell during the charge-discharge test.

18. A battery module, comprising:
a group of cells;
a first end plate and a second end plate opposite to the first end plate, the group of cells being sandwiched between the first end plate and the second end plate, and a module assembly being formed by the group of cells, the first end plate, and the second end plate; and
at least one module steel strap, the module assembly being bound by the at least one module steel strap;
wherein the steel strap is manufactured by using the design method of the module steel strap according to any one of claims 10 to 17.

19. A battery pack, comprising:
the battery module according to claim 18; and
a battery case, wherein the battery module is disposed in the battery case.
